# EUROPEAN PATENT APPLICATION

(11) **EP 1 289 289 A1**
(43) Date of publication of application: **05.03.2003**
(21) Application number: 01967827.5
(22) Date of filing: 25.09.2001
(51) Int. Cl.: H04N 5/775, H04N 1/387, H04N 5/225, H04N 7/18, G06T 1/00, G06T 1/60

(54) **PHOTOGRAPHING TERMINAL DEVICE, IMAGE PROCESSING SERVER, PHOTOGRAPHING METHOD AND IMAGE PROCESSING METHOD**

(30) Priority: 26.09.2000 JP 2000291525
(71) Applicant: Yokohama Consulting Group Inc, Chiyoda-ku, Tokyo 102-0085 (JP)
(72) Inventor: OHMAE, Hiroki, c/o Yokohama Consulting Group Inc, Chiyoda-ku, Tokyo 102-0085 (JP); OHMAE, Kenichi, c/o Yokohama Consulting Group, Inc, Chiyoda-ku, Tokyo 102-0085 (JP)
(74) Representative: Milhench, Howard Leslie
(86) International application number: JP0108302
(87) International publication number: WO02028099

(57) **Abstract**

A photographing terminal device, an image processing server, a photographing method, and an image processing method are provided that make it possible to take pictures practically in unlimited number of frames without depending on memory devices provided in cameras and to simultaneously record additional information at the time of photographing. The photographing terminal device comprises a photographing section 114 for taking images of an object and producing image data, a transmitter 110 for sending the produced image data to a remote server in real time, and an additional information producing devices 111, 115 for producing additional data related to additional information in addition to the produced image data, and is adapted to send the image data together with the additional data to the remote server.

## Description

### Technical Field

This invention relates to a photographing terminal device, an image processing server, a photographing method, and an image processing method and in particular relates to those capable of sending photographed image data to a remote server.

### Background Art

Digital cameras for photographing objects and producing image data are conventionally known. The digital cameras produce digital data of photographed images and stores the data in memory devices in place of films used in silver salt photography.

The known type of digital cameras as mentioned above can take pictures only within the memory capacity of the memory devices provided. Moreover, the information that can be collected at the time of photographing is limited to digital data of images only. Any other information related to pictures such as the information on the photographed places must be recorded with other devices or methods as by handwriting.

Since the image data depend on the memory devices provided in the digital cameras, the data cannot be controlled efficiently. Furthermore, sorting the image data and collected information must be done manually by a person.

In view of the above, the present invention intends to provide a photographing terminal device, an image processing server, a photographing method, and an image processing method that make it possible to take pictures practically in unlimited number of frames without depending on the memory devices provided in the camera and that make it possible to record additional information at the time of photographing.

### Disclosure of Invention

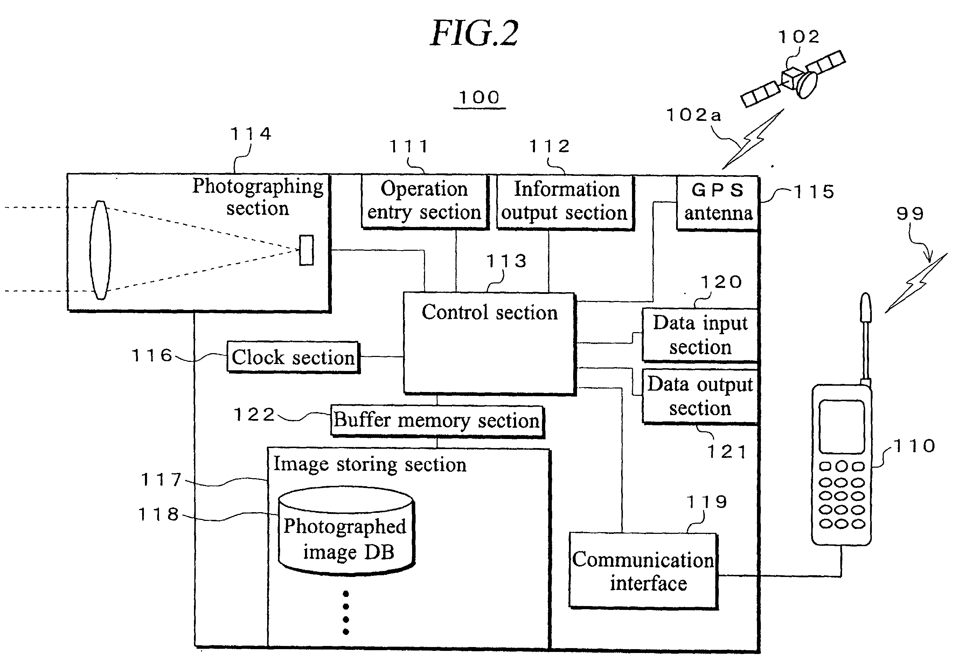

A photographing terminal device 100 according to one embodiment of the invention comprises as shown in FIG. 2 for example: a photographing section 114 for taking images of an object and producing image data; a transmitter 110 for sending the produced image data to a remote server in real time; and additional information producing devices 111, 115 for producing additional data related to additional information in addition to the produced image data; so as to send the image data together with the additional data to the remote server.

The photographing terminal device 100 is typically a digital camera having a function of i-Mode (trademark) cellular phones or the like.

The above constitution comprises the photographing section 114 for taking images of an object and producing image data, the transmitter 110 for sending the produced image data to the remote server in real time, and the additional information producing devices 111, 115 for producing additional data related to additional information in addition to the produced image data, and sends the image data together with the additional data to the remote server. Therefore, not only there is no need of separately recording the additional information at the time of photographing but pictures can be taken practically in unlimited number of frames in any place where a connection to the remote server is possible.

The additional information may be for example geographic information on a photographing place and the additional data may be photographing place identifying data that specify that place. Such information may also be explanation on pictures by voice or background sound around the photographing place through a microphone, data entered through a keyboard or time when the photographs were taken.

The photographing terminal device 100 according to an embodiment of the invention may also comprise an image storing section 117 for storing the produced image data and a controller 113 for controlling so that new image data may be stored in part of the storage region of the image storing section 117 where data have already been sent to the remote server by means of the transmitter 110.

The above constitution comprises the image storing section 117 and the controller 113 for controlling so that new image data may be stored in part of the storage region of the image storing section 117 where data have already been sent to the remote server through the transmitter 110. Therefore, in the case the transmitter cannot be connected to the remote server, or in the case the transmission speed of the transmitter 110 is slower than that of photographing, the photographing may be continued. Moreover, since new image data may be stored in the storage region of the image storage section 117 where data have been sent to the remote server, the storage region of the image storage section 117 is used efficiently.

A photographing terminal device 100 according to an embodiment of the invention comprises as shown in FIG. 2 for example: the photographing section 114 for taking images of an object and producing image data; the image storage section 117 for storing the produced image data; an output section 119 for outputting the stored image data to the transmitter 110 for sending the outputted data to the remote server; the controller 113 for controlling so that new image data may be stored in part of the storage region of the image storing section 117 where data have already been sent to the remote server by means of the transmitter 110; and the additional information producing devices 111, 115 for producing additional data related to the additional information in addition to the produced image data; and sends the image data together with the additional data to the remote server.

Since the above constitution comprises the output section 119 for outputting the stored image data to the transmitter 110 which in turn sends the image data to the remote server, the image data may be sent to the remote server.

Moreover, the above photographing terminal device 100 may comprise an input section 119 for inputting image data from the remote server.

And, the above photographing terminal device 100 may comprise a buffer memory 122 between the image storing section 117 and the controller 113.

Furthermore, in the above photographing terminal device 100, while the images of the image data are typically still images, they may also be motion images.

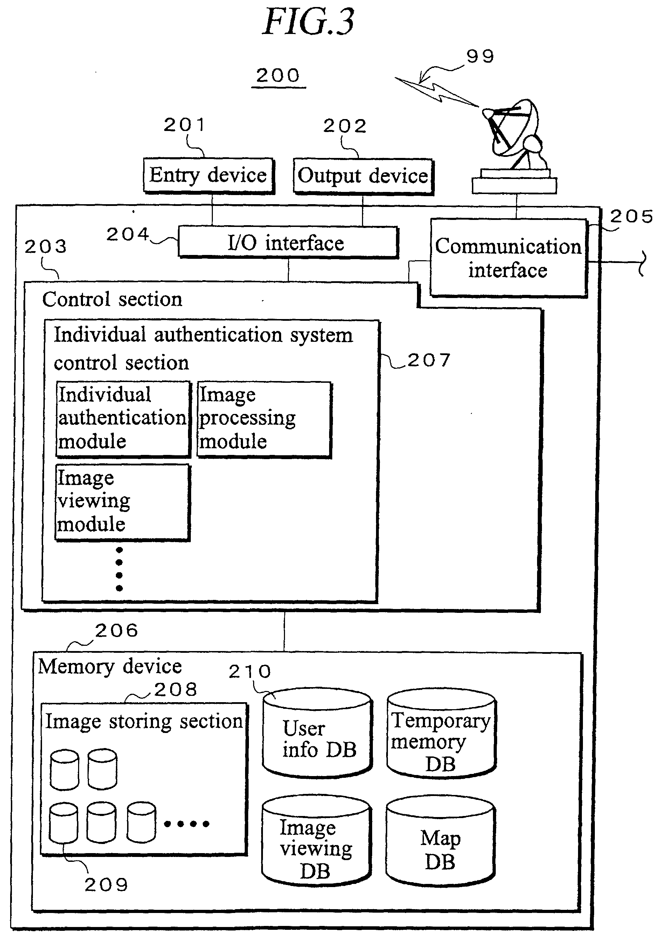

An image processing server 200 according to an embodiment of the invention comprises as shown in FIG. 3 for example: a receiving section 205 for receiving image data sent from the photographing terminal device 100; a user information database 210 for storing user information related to the users of the photographing terminal device 100; and an image data storing section 208 for storing the received image data by corresponding to the user information in the user information database 210.

Since the above constitution comprises the receiving section 205 for receiving image data sent from the photographing terminal device 100, the user information database 210 for storing user information related to the users of the photographing terminal device 100, and the image data storing section 208 for storing the received image data corresponding to the user information in the user information database 210, the user information received from the photographing terminal device 100 are made to correspond to the image data, and the data are stored efficiently in a memory device.

The image processing server 200 according to the other embodiment of the invention may also comprise a processing section 203 for processing image data stored in the image data storing section 208. In that way, the server administrator may be able to process the image data on the server side according to user's request. The term processing refers, when for example image data are stored in the image data storing section, to changing the image data to a storage-purpose format, or when image data are outputted on request of a user, to editing image data such as trimming the image data and inputting texts in addition to changing the data to an output-purpose format.

The image processing server 200 according to still another embodiment of the invention may also comprise an output section 205 for outputting the stored image data on request of a user. This makes it possible for the user to easily take out image data. Taking out image data is typically done by downloading with a personal computer or the like.

In the above image processing server 200, while the images of the image data are typically still images, they may also be motion images.

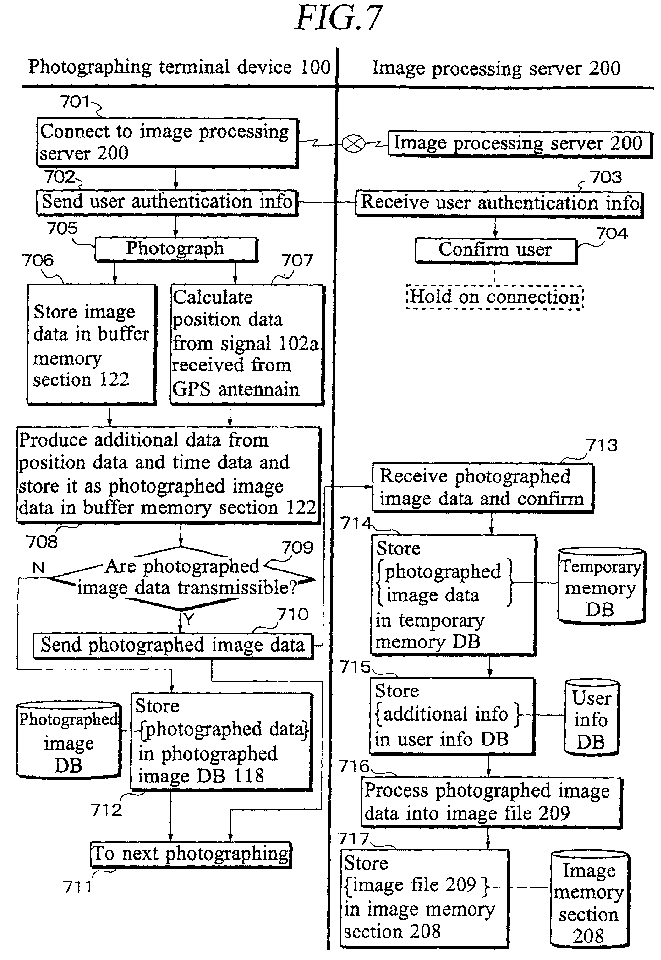

A photographing method according to an embodiment of the invention comprises as shown in FIG. 7 for example: a photographing step 705 of photographing an object and producing image data; an image storing step 712 of storing the produced image data; an additional data producing step 708 of producing additional data related to additional information in addition to the produced image data; and a transmitting step 710 of sending the stored data together with the additional data to a remote server 200 in real time; and differentials between the produced image data and the transmitted image data are accumulated.

Since the above constitution comprises the additional data producing step 708 of producing additional data related to additional information in addition to the produced image data, and the transmitting step 710 of sending the stored data together with the additional data to the remote server 200 in real time, the additional information need not be separately recorded at the time of photographing, so that the user can concentrate his or her attention on photographing.

Moreover, since the above constitution comprises the transmitting step 710 of sending the image data to the remote server 200 in real time, and the differentials between the produced image data and the transmitted image data are accumulated, the amount of image data to be stored may be held to a minimum by sending the image data in real time to the remote server 200, and the memory device may be used efficiently. As a result, the number of frames for photographing may be made practically unlimited. In case that the image data are motion image data, photographing may be continued even if the transmission speed is slower than the photographing speed.

That the differential between the produced image data and the transmitted image data is accumulated refers to for example that the differential between the speed of producing images (hereinafter called production speed as appropriate) and the speed of transmitting images (hereinafter called transmission speed as appropriate) is accumulated. In other words, if the transmission speed is always faster than the production speed, no image data are accumulated in the image storing section 117. The term accumulate refers typically to the increase in the amount of image data stored in the image storing section 117 before the transmission.

An image processing method according to an embodiment of the invention comprises as shown in FIG. 7 for example: a receiving step 713 of receiving image data sent from a remote photographing terminal device 100; a user information storing step 715 of storing user information related to the user of the photographing terminal device 100; and an image data storing step 717 of storing the received image data corresponding to the stored user information.

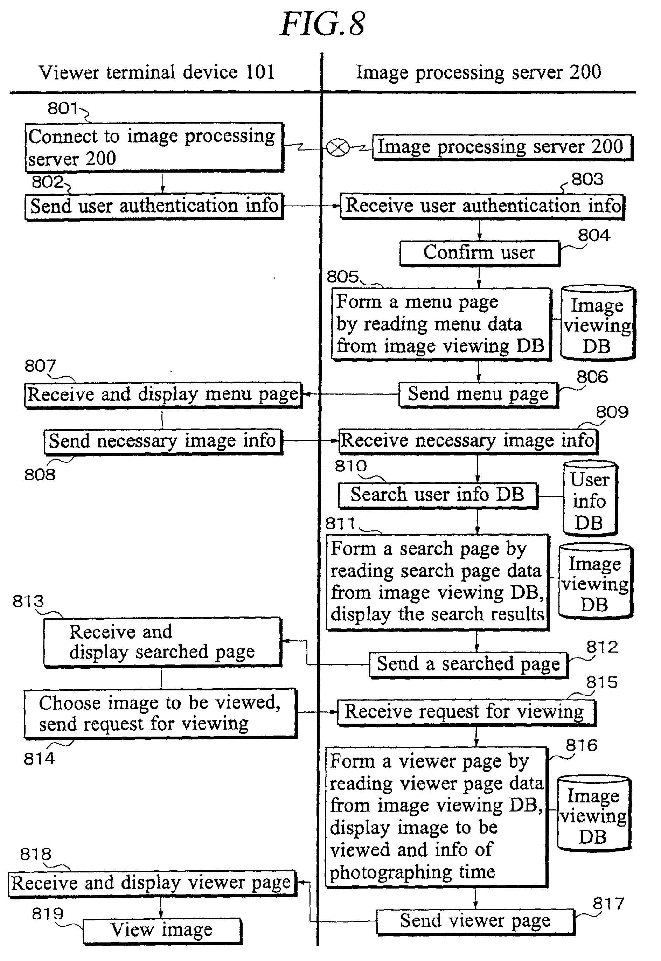

An image processing method according to an embodiment of the invention comprises as shown in FIG. 8 for example: a processing step 816 of processing the stored image data; and an outputting step 817 of outputting the processed image data on request of a user.

This application is based on the Japanese patent application No.2000-291525 filed on September 26, 2000 in Japan, and the contents of which are incorporated herein as a part thereof.

The present invention can also be fully understood by referring to the following detailed description. Further extensive applications of the invention will be apparent from the following detailed description. However, it should be noted that the detailed description and specific examples are preferred embodiments of the invention only for the purpose of the description thereof. As will become apparent to one skilled in the current art, modifications and changes can be made in a variety of manners within the scope and spirit of the invention.

The applicant does not intend to dedicate any disclosed embodiments to the public. Of the disclosed modifications and alterations, those which may not literally fall within the scope of the claims, are considered to be part of the invention under the doctrine of equivalents.

### Brief Description of Drawings

FIG. 1 is a block diagram showing an overview of a photographed image processing system as an embodiment of the invention.
FIG. 2 is a block diagram of an example constitution of a photographing terminal device used by users as an embodiment of the invention.
FIG. 3 is a block diagram of an example constitution of an image processing server for use in an embodiment of the invention.
FIG. 4 is a functional overview block diagram of an individual authentication system 207 when a user sends photographed image data to an image processing server in an embodiment of the invention.
FIG. 5 is a functional overview block diagram of an individual authentication system 207 when a user views images stored in the image processing server in an embodiment of the invention.
FIG. 6 is an example process flowchart of registration of a user with the individual authentication system 207 in an embodiment of the invention.
FIG. 7 is an example process flowchart when a user takes images of an object and transmits produced image data to the image processing server for storage in an embodiment of the invention.
FIG. 8 is an example process flowchart when a user views images stored in the image processing server in an embodiment of the invention.
FIG. 9 shows an example menu page displayed on a display when a user views images in an embodiment of the invention.
FIG. 10 shows an example page of searched results displayed on a display when a user views images in an embodiment of the invention.
FIG. 11 shows an example of viewer page displayed on a display when the user views images in an embodiment of the invention.
FIG. 12 shows two cases in comparison when a camera A of an embodiment of the present invention is used and when a conventional camera B is used as a comparison example.
FIG. 13 shows a situation when a user changes the camera of the present invention from a camera A to a camera A' in comparison with a situation when changing the conventional camera from a camera B to a camera B' as a comparison example.
FIG. 14 shows a situation when the camera A as an embodiment of this embodiment is used to collect materials of an event in comparison with when the conventional camera B is used for the same purpose.

### Best Mode for Carrying Out the Invention

Embodiments of the invention will be described hereinafter in reference to appended drawings. The same or counterpart components in the drawings are provided with the same or like symbols and redundant explanations are omitted.

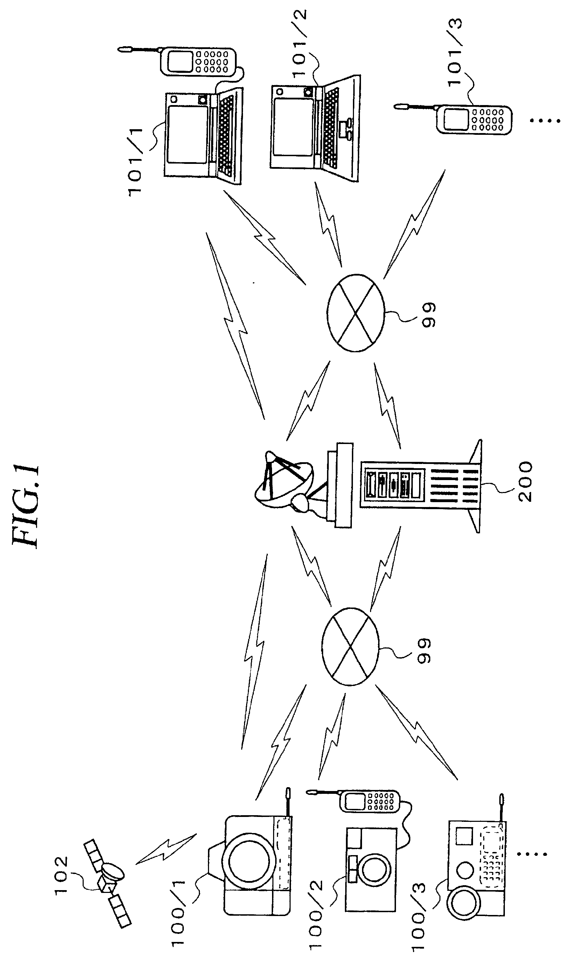

FIG. 1 is a simplified block diagram as an overview of a system for use, a photographed image processing system (hereinafter called an image processing system as appropriate), including a photographing terminal device and an image processing server, as embodied according to the invention. Any user (photographing person or permitted viewer) who intends to use the image processing system operates a photographing terminal device 100/1, 100/2, 100/3 or a viewer terminal device 101/1, 101/2, 101/3. In the following explanation, whenever the explanation need not discriminate the specific photographing terminal device or the specific viewer terminal device, it is referred to simply as the photographing terminal device 100 or the viewer terminal device 101. The photographing terminal device 100 and the viewer terminal device 101 are connected through a network 99 to the image processing system provided on the side of a server 200.

Here, the photographing terminal device 100 is typically a digital camera incorporating functions of cellular phones such as that of i-Mode (trade name). The device may be alternatively made in small size and light weight by dropping the conversation function of cellular phones, to be a dedicated communication terminal with only the function of sending and receiving image data. Or, the photographing terminal device 100 may be made to serve as the viewer terminal device 101.

While the viewer terminal device 101 is typically a personal computer, it may widely be cellular phones with a built-in IC (including LSI), Web TVs with a built-in IC, and consumer electronics appliances with an IC. In other words, any conventional, general purpose device that can use the Internet may be utilized as the viewer terminal device 101.

Users, photographing persons, using the photographing terminal devices 100 take images of objects. The images taken are transmitted to the server 200 located outside as seen from the photographing terminal devices 100. The number of the photographing terminal devices 100 present is at least the number of photographing persons or plural number. The network 99 (hereinafter may be simply called the net) is not limited to the computer network such as the Internet or telephone line but may take any form such as that of TV waves, satellite network, cable network, TV gap waves, etc. The image processing system may be implemented in various computers such as a personal computer, work station, main frame, etc. serving as a server 200.

The photographing terminal devices 100 and the viewer terminal devices 101 may be connected to the server 200 either directly through cables to form a network 99 or through a provider on the network. There may be a plurality of providers. The connection may be made direct and wireless.

FIG. 2 is a block diagram of an example constitution of a photographing terminal device 100 used by each user.

The user uses the entry operation section 111 provided with the photographing terminal device 100 to give operation instructions to the photographing terminal device 100 and enter information at the time of taking images. The entry operation section 111 is for example keys, a microphone (for voice instructions), a remote control device, a touch screen, etc.

To display the state of the screen of the image processing section or entered information or the state of the device, an information output section 112 provided with the photographing terminal device 100 is used. The information output section 112 is for example a display such as an LCD (Liquid Crystal Display) device or a printer. While the entry operation section 111 and the information output section 112 are shown on the drawing as contained in the photographing terminal device 100 as a single unit, they may be provided separately. The entry operation section 111 and the information output section 112 are connected to and controlled with a control section 113 provided in the photographing terminal device 100.

The photographing terminal device 100 is provided with a photographing section 114 for producing image data from images taken. The photographing section 114 is connected to and controlled with the control section 113. When the user intends to take images of an object, the user operates the photographing section 114 using the entry operation section 111. The image data taken are sent through the control section 113 to the server 200 or stored in a photographed image database 118 (hereinafter may be called DB as appropriate).

The photographing terminal device 100 is also provided with a GPS antenna 115 for receiving position data of photographing locations. The GPS antenna 115 is connected to the control section 113 and is capable of receiving signals 102a from a satellite 102. The control section 113 calculates position data using the signals 102a received from the GPS antenna 115, relates the calculated position data (values of latitude and longitude) to the image data, and sends out or records the resultant data in the photographed image DB 118. The position data are useful when they are adapted to be transferable to existing navigation systems such as car navigation systems. In that way, when any other user intends to go to the same photographing location the user can go easily to the location using the navigation system.

At this time, information (such as voice information) on photographing entered through the entry operation section 111 and time data outputted from a clock section 116 connected to the control section 113 are related to the image data and also sent out or recorded in the photographed image DB 118. The image data attached with such additional information as additional data are referred to as photographed image data. Recording the additional data in the photographed image DB 118 may be made simultaneously when recording the image data.

A communication interface 119 is connected to the control section 113, so that photographed image data may be sent to a communication device 110 and that image data files, information, program module, etc. may be received from the server 200. The communication interface 119 is also connected to the communication device 110 to move data to and from the communication interface 119 and to and from the server 200. The communication device 110 is typically any cellular phone with functions like that of i-Mode (trade name). In case that communication device 110 is provided with an input-output device or the like (such as an entry operation device), it is preferable to arrange so that the photographing terminal device 100 may be operated also from the communication device 110.

An image storing section 117 is connected to the control section 113 to store the photographed image DB 118 for recording the image data or the like that are not transmitted to the server 200. In the image storing section 117 may also be stored image data files downloaded from the server 200, program modules, information on use, information on the operation of the photographing terminal device 100. The image storing section 117 may be adapted to be detachable and replaceable. In that way, for example when images are taken up to the maximum capacity of the image storing section 117, and the image data cannot be transmitted to the server 200, images may be taken further by replacing the image storing section 117 with another one.

A buffer memory section 122 is provided between the control section 113 and the image storing section 117. As a result, photographing is made possible even during the replacement of the image storing section 117 by storing the photographed image data in the buffer memory section 122, so that the user cannot miss any chance of covering unexpected happenings. The buffer memory section 122 is controlled with the control section 113 to transfer the photographed image data stored in the buffer memory section 122 to the image storing section 117 when the image storing section 117 is replaced and secure the storable capacity of the buffer memory section 122 as large as possible.

The image storing section 117 is controlled with the control section 113 so that newly photographed and produced image data may be stored in the storage region of the photographed image DB 118 from where photographed data have been transmitted to the server 200.

To the control section 113 are further connected a data entry section 120 and a data output section 121. The data entry section 120 and the data output section 121 are connected to the other photographing terminal device 100, a computer such as a personal computer, or a digital camera to directly exchange photographed image data, or connected to other communication devices (such as modems) to exchange photographed image data. The data entry section 120 may be connected to an entry device such as a keyboard. The data output section 121 may be connected to other output devices such as displays and printers.

FIG. 3 is a block diagram of an example constitution of an image processing server 200 (hereinafter called a server 200 as appropriate) connected to the photographing terminal device 100 through the net 99. The individual authentication system 207 as an image processing system on the server's side operates in the image processing server 200.

The above system is implemented in the image processing server 200. The system may be implemented or constituted with various computers such as a personal computer, a workstation, a mainframe, etc. The image processing server 200 is provided with a control section 203 for controlling the image processing system. The image processing server 200 is also connected to an entry device 201 for entering information for operating the image processing server 200 and an output device 202 for outputting the results processed in the image processing server 200. The entry device 201 and the output device 202 are connected to the control section 203 through an I/O interface 204. The I/O interface controls the entry device 201 (such as a keyboard) and the output device 202 (such as a display).

The control section 203 is connected to the communication interface 205. Photographed image data are received from photographing terminal devices 100 used by respective users through the communication interface 205 and further through the net 99. Various pieces of information on the image processing system and image data files are exchanged with the viewer terminal devices 101 and the photographing terminal devices 100 used by respective users.

The control section 203 is also provided with the individual authentication system control section 207 (hereinafter called the individual authentication system as appropriate) that is a system implemented in the image processing server 200 used by users. The individual authentication system control section 207 is adapted so that users can gain access through the network 99 and download data wholly or partially (only necessary part of the data) as required into the users' devices. The individual authentication system 207 is used by users to transmit photographed image data and to view the transmitted images.

The system of this embodiment includes the individual authentication module, the image processing module, and the image viewing module. The modules enumerated above may be selected appropriately to constitute the system, and the modules are not limited to those enumerated above.

The control section 203 is connected to a memory device 206 for storing data and information necessary for the image processing system. In this embodiment, the memory device 206 includes an image storing section 208, a user information database 210, a temporary memory database, an image viewing database, and a map database. The databases and files stored in the memory device 206 are not limited to those enumerated above. In the image memory section 208 is stored an image file 209 of photographed and received image data subjected to the process to be most suitable for being stored in the memory device 206.

While the image memory section 208 and the user information DB 210 in the present embodiment are described on the assumption that they are stored in the memory device 206 of the image processing server 200, they may be assumed to be separate devices. For example, the image memory section 208 may be an image file server, and the user information DB 210 may be a user information server.

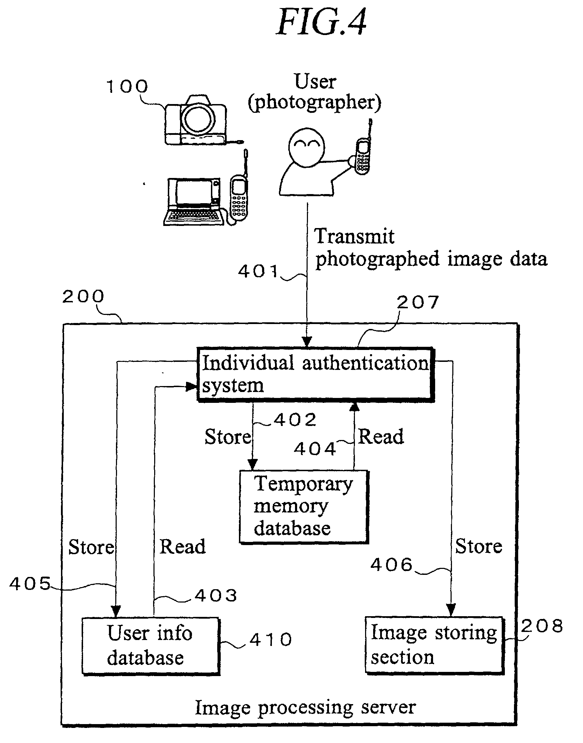

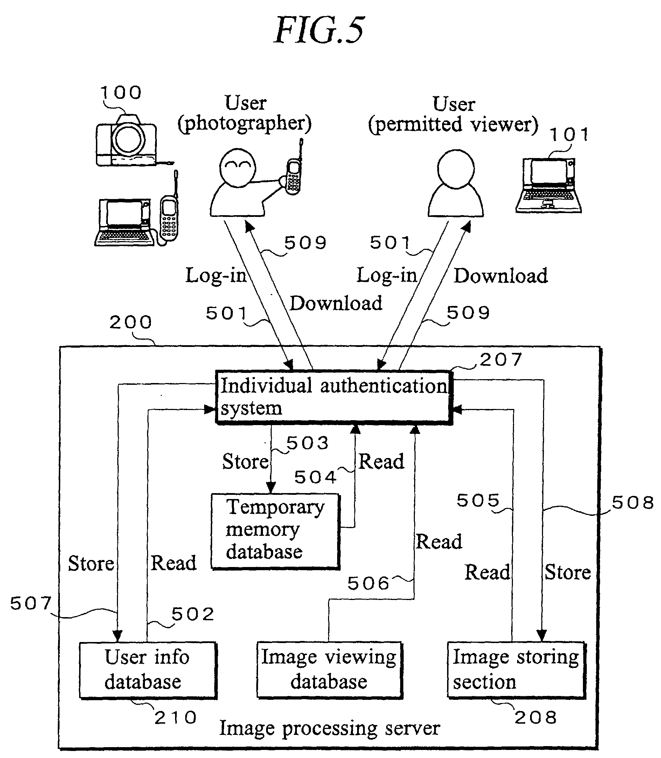

FIGs. 4 and 5 are overview block diagrams of a functional example of an individual authentication system 207. In reference to FIG. 4, how a user sends photographed image data to an image processing server 200 will be described.

A user as a photographing person using the photographing terminal device 100 (FIG. 2) sends photographed image data obtained by photographing an object to the individual authentication system 207 in the image processing server 200 (401). At this time, the individual authentication information on the photographing person registered in advance is recorded corresponding to the transmitted photographed image data.

The individual authentication system 207, upon receiving the image data photographed by the photographing person, first stores the photographed image data in the temporary memory database (402). Next, the system confirms the individual authentication information on the stored photographed image data, and reads the photographing person's individual authentication information from the user information DB 210 (403). When the system determines the authenticity of the individual authentication information read, the system reads whole or part of the information at the photographing time point from the photographed image data (404), and stores the information in the user information DB 210 (405). The photographed image data are processed into an image file 209 that is suitable for storage in the image memory section 208 (FIG. 3) and stored in the image memory section 208 (406). The storage information of the image file 209 is also stored in the user information DB 210. The above-mentioned processing into an image file that is suitable for storage is for example to store the whole data in the user information DB 210 and then delete additional data such as the information at the time of photographing, so that only the image data are stored. Furthermore, the storing file size may be reduced by compressing the image data.

Next is described, in reference to FIG. 5, a case that a user, namely a photographing person or a permitted viewer, views the images stored in the image processing server 200. A permitted viewer is any person permitted to view the image data that any photographing person has stored in the image processing server 200. A photographing person can register permitted viewers for every set of image data that the photographing person himself or herself has stored in the image processing server 200.

A user logs in the individual authentication system 207 by sending individual authentication information through a viewer terminal device 101 or photographing terminal device 100 (501). Upon logging in the individual authentication system 207, the user requests image data that the user intends to view, from the individual authentication system 207.

According to the received individual authentication information (502), the individual authentication system 207 reads from the user information DB 210 the information such as an overview table of image data stored in the image memory section 208, which is necessary for responding to the user's request, and stores the read information in the temporary memory DB (503). As information stored in the temporary memory DB is read (504), a necessary image file 209 is read (505) and stored in the temporary memory DB (503).

Next, the individual authentication system 207 reads information necessary for forming a page for the user to view images, from the image viewing DB (506), and forms a viewer page using the read information, the information stored in the temporary memory DB, and the image file 209. The user can view on the viewer page the images stored in the image processing server 200. The viewer page is typically a Website (a site formed with HTML files) or what is called "Home-page".

In the case the user edits images when the user views the images, the edited information is stored in the user information DB 210 (507), and the edited image file 209 is stored in the image memory section 208 (508). Registration of permitted viewers may also be made here.

In case that the user intends to download the image file 209, the individual authentication system 207 processes the image file 209 into a format requested by the user, and the file is downloaded into the viewer terminal device 101 or into the photographing terminal device 100 (509).

It is preferable to arrange that the images may be outputted with the output device 202 (FIG. 3) provided in the image processing server 200. For example, a printer (such as a color copier) that is higher in price and performance than general purpose printers is used as the output device 202. When images are outputted using such a printer, printed images of higher quality may be provided to the general public.

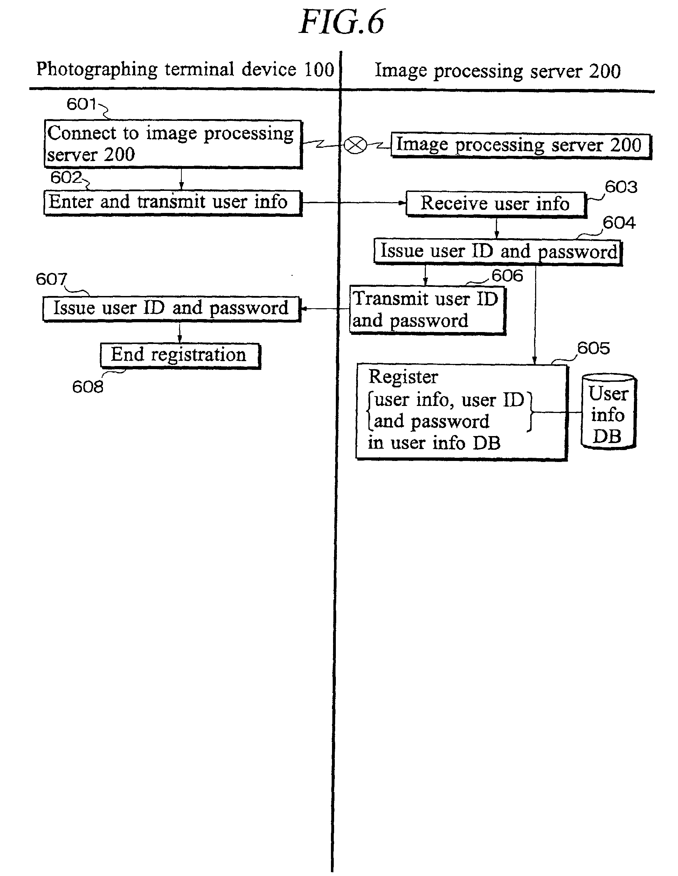

To use the image processing system, the user must first register at the individual authentication system 207 of the image processing server 200. FIG. 6 is an example of process flowchart when the user registers at the individual authentication system 207. The registration process is carried out with the individual authentication module in the individual authentication system 207.

First, the user connects the photographing terminal device 100 to the image processing server 200 through the network 99 (FIG. 1) (step 601).

Next, the user enters the user's own information (such as the user's name, address, telephone number, e-mail address, etc.) and information on the photographing terminal device 100 that the user is using, and sends the pieces of information to the image processing server 200 (step 602).

The individual authentication system 207 of the image processing server 200, upon receiving the transmitted user information (step 603), issues the ID and password of the user by means of the individual authentication module (step 604). The received user information, ID and password of the user are registered in the user information DB 210 (step 605). The ID and password of the user are sent to the photographing terminal device 100 (step 606).

The photographing terminal device 100 receives the transmitted ID and password of the user (step 607). In case that the image storing section 117 or the communication device 110 is provided with a memory device, the received ID and password of the user may be stored in the memory device. That is convenient for the user as the user does not have to enter the ID and password every time of connecting the terminal device to the individual authentication system 207.

Thus, the registration with the individual authentication system 207 is completed (step 608).

The user who has completed the registration with the individual information system of the image processing server 200 is permitted to use the image processing system.

FIG. 7 is an example process flowchart as the user produces image data by photographing an object and sends the produced image data to the image processing server for the sent data to be stored.

First, the user starts up the photographing terminal device 100 to make connection to the image processing server 200 (step 701) through the net 99 (FIG. 1) and sends out the user authentication information (step 702). Here, the communication between the photographing terminal device 100 and the image processing server 200 is preferably made by packet communications currently in use with cellular phones. By doing so, the communication is charged only for the amount of data communicated even if connection is held on, so that the photographing person can take images at ease while holding the connection with the server 200.

And the individual authentication system 207 of the image processing server 200 receives the user authentication information (step 703) and starts up the individual authentication module. The individual authentication module compares the received user authentication information with the user authentication information recorded in the user information DB 210 to confirm the user and holds the connection (step 704). The above connecting actions may be set to automatically work with the photographing terminal device 100 when the photographing terminal device 100 is started up or photographing is performed. With such a setting, the user can concentrate his or her attention on photographing as the conventional cameras without being conscious of the connection with the server 200.

Next, an images of the object is taken (step 705). At this time, the photographing person enters a photographing instruction through the entry operation section 111 (presses the shutter button). As the photographing instruction is entered, the control section 113 operates the shutter provided in the photographing section 114 to take an image.

The image data obtained by the photographing are stored in the buffer memory section 122 through the control section 113 (step 706). At this time, the control section 113 enters a signal 102a received with the GPS antenna 115 and calculates position data of the photographing location (step 707) based on the signal 102a. Additional data are produced from the calculated position data and time data received from the clock section 116, related to the stored image data, and stored as photographed image data in the buffer memory section 122 (step 708). The time data are those at the photographing location with time difference corrected by the calculated position data. The information entered by the photographing person at the time of taking images are recorded to the additional data when the photographing person enters information (for example voice).

Next, the control section 113 determines whether the photographed image data can be transmitted to the image processing server 200 (step 709). If the data are transmissible (Y in the step 709), the photographed image data are transmitted to the image processing server 200 (step 710), and the next photographing is made (step 711). If the data cannot be transmitted (N in the step 709), the photographed image data are stored in the photographed image DB 118 of the image storing section 117 (step 712), and the next photographing is made (step 711). The photographed image data stored in the photographed image DB 118 are automatically transmitted as soon as they become transmissible unless the photographing person prohibits the transmission.

The individual authentication system 207 of the image processing server 200, upon receiving the photographed image data, uses the individual authentication module to confirm the user authentication information of the photographed image data received (step 713), and then stores the data in the temporary memory DB (step 714).

The individual authentication module reads additional pieces of information (photographed date, etc.) from the photographed image data stored in the temporary memory DB and stores them in the user information DB 210 (step 715).

Next, the individual authentication system 207 uses the image processing module to process the photographed image data into an image file 209 (step 716), and stores the image file 209 in the image memory section 208 (step 717).

In case that next photographing follows, the steps are repeated from the step 705. In case that no more photographing follows, connection with the server 200 is terminated. The connection with the server 200 may be arranged to be automatically shut off by the server 200 when no transmission of data occurs for longer than a predetermined period of time (for example three minutes or so).

The user (photographing person or permitted viewer) can view the images stored in the image processing server.

FIG. 8 is an example process flowchart when the user views images stored in the image processing server.

First, the user connects the photographing terminal device 100 to the image processing server 200 (step 801) through the network 99 (FIG. 1) to send the user authentication information (step 802).

The individual authentication system 207 of the image processing server 200 receives the user authentication information (step 803) and operates the individual authentication module. The individual authentication module confirms the user by comparing the user authentication information recorded in the user information DB 210 with the received user authentication information (step 804).

Next, the individual authentication system 207 operates the image viewing module to read the menu data stored in the image viewing DB and forms a menu page (step 805). The formed menu page is transmitted to the viewer terminal device 101 (step 806).

The viewer terminal device 101 receives the menu page and displays it on an output device such as a display (step 807). The user refers to the menu page, enters necessary image information (such as the date of photographing), and sends it to the image processing server 200 (step 808).

The image processing server 200, upon receiving necessary image information (step 809), searches the user information DB 210 with the individual authentication module on the basis of the received information (step 810). The searched result is displayed on a searched result page (step 811) and sent to the viewer terminal device 101 (step 812). Incidentally, the searched result page may be formed by the use of the image viewing module by reading the searched page data stored in the image viewing DB.

The viewer terminal device 101 receives the searched result page and displays it on an output device such as a display (step 813). The user refers to the searched result page and chooses an image file that the user wants to view, from the searched result. As a result, the viewer terminal device 101 sends the user's intention of viewing images and information on the images that the user intends to view, to the image processing server 200 (step 814).

When the image processing server 200 receives the user's intention of viewing images and information on the images that the user wants to view (step 815), on the basis of this, the image processing server uses the individual authentication module and the image processing module to read information at the time of photographing from the user information DB 210 and the image file 209 from the image memory section. These are displayed on the viewer page (step 816) and sent to the viewer terminal device 101 (step 817). Incidentally, the viewer page may be formed by using the image viewing module and reading the viewer page data stored in the image viewing DB.

The viewer terminal device 101 receives the viewer page and displays it on an output device such as a display (step 818). The user views images on the displayed viewer page (step 819).

To view the images, the user operates while referring to the page (Web page) shown on the display of the viewer terminal device 101. Example operation by the user on respective pages is described below in reference to example pages shown on the display. The operation is assumed to be performed using a mouse and a keyboard.

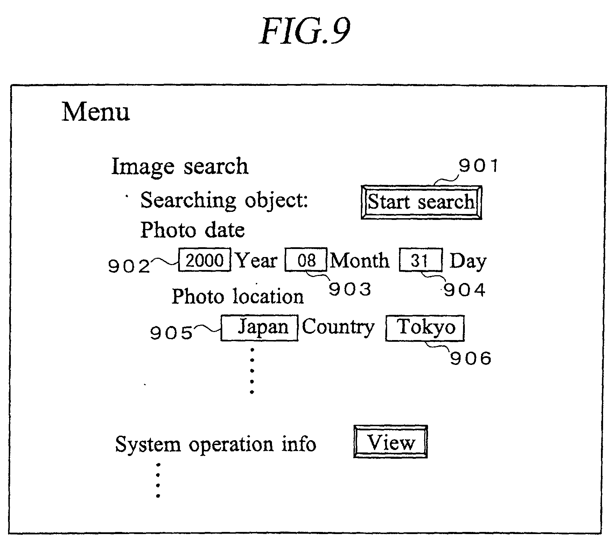

FIG. 9 shows an example menu page shown on the display when the user views images. To view images, the user first refers to the menu page. The menu page shows information on how to use the system or search images. When the user wants to view images, the user searches images on this page.

To search images, the user first enters a subject of search. The search of the subject may be facilitated when the information at the time of photographing such as the date or place of photographing is chosen as the subject of search. Here, it is assumed that the subjects of search are the photographing date and photographing location.

The user moves the cursor to the entry boxes 902, 903, and 904 for entering the year, month, and day to enter the year, month, and day in numerals. The entry may be made for example only for the year or the day. Next, the user moves the cursor to the entry boxes 905 and 906 for entering the photographing location, and enters the names of the country and district. The entry of the district name may be made with for example Tokyo only, or Nagata-cho only. The entry here may be made for example for only the country name, or only the district name.

When the entry of the subject of searching is over, the mouse cursor is brought to a search start button 901 provided on the page and clicked. Thus the search starts.

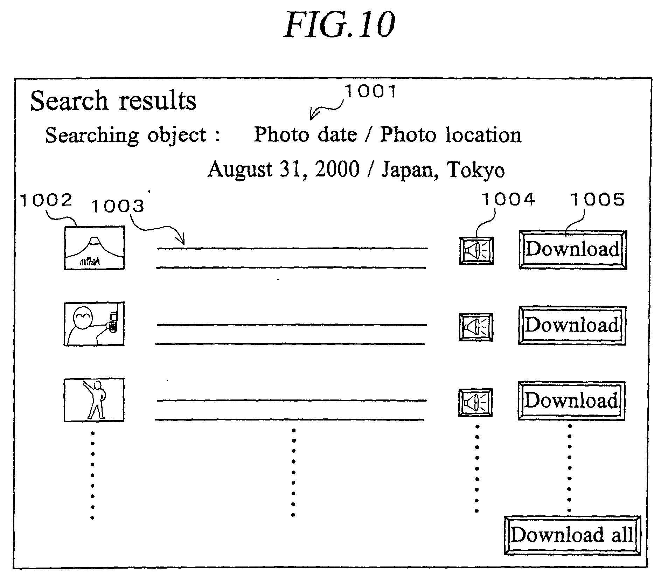

FIG. 10 shows an example page of searched results displayed on a display when the user views images. In case that the user carries out a search for images, search results are shown on a searched result page. On the searched result page, the user can refer to the information at the time of photographing, choose images the user want to see, or download images.

On the searched result page is shown a searched subject 1001 used for the search. As the search results, an image preview 1002 corresponding to the search subject and a comment 1003 on the image are displayed.

The user refers to the search results shown on the searched result page. If there is any image that the user wants to see, the user moves the mouse cursor to the image preview 1002 and clicks it. In this way, the user can view the chosen image.

When the user wants to hear voice information, the user can hear by bringing the mouse cursor to the voice information button 1004 provided on the page and clicking it. If the user further wants to download the image, the user can download by bringing the mouse cursor to the download button 1005 and clicking it.

As the user moves the mouse cursor to the image preview 1002 and clicks it, a viewer page is shown on the display. The user can view the image on the viewer page.

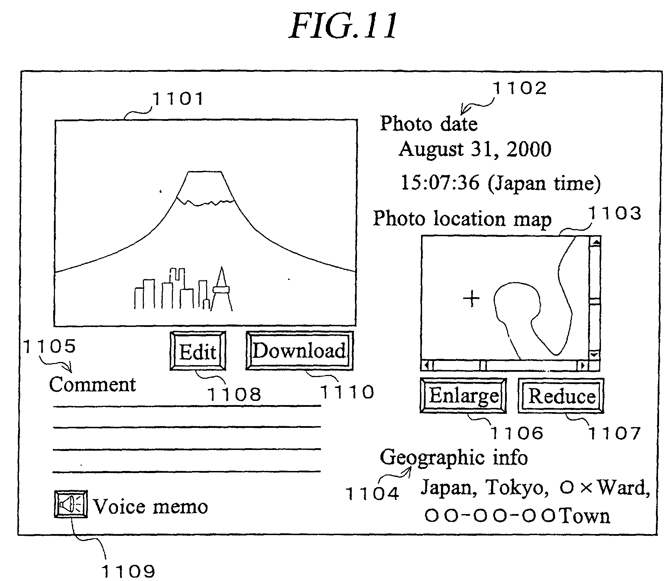

FIG. 11 shows an example of viewer page shown on the display when the user views images. Images to be viewed by the user may be shown on the viewer page. On the viewer page, it is possible to refer to all the images and information related to the time of photographing. It is further possible to edit images and download the images.

An image 1101 to be viewed by the user is shown on the viewer page, together with the date and time 1102 of photographing, a map 1103 and geographic information 1104 of the photographing location, and comments on the image. The map 1103 of the photographing location is made with the image viewing module of the individual authentication system 207 by reading the map around the photographing location, based on the position data of the image, from the map DB stored in the memory device 206 (FIG. 3), and indicating the photographing location on the map.

The map 1103 of the photographing location may be displayed in enlarged or reduced scale by clicking a zoom-up button 1106 or a reduction button 1107 provided on the page. This enables the user to know exactly the photographing location, so it is convenient for example when the user wants to take images again in the same location.

When the user wants to edit images, the user can do editing work for example to trim the image frame, correct brightness and color tone, and enter text by clicking the editing button 1108 provided on the page. In the present embodiment, the editing of images can be performed with the image viewing module; however, actually it is preferable to provide a separate editing module for editing images.

The comments on the image 1105 may be edited by clicking the comment area. To hear the voice information, the user clicks a voice information button 1109 provided on the page. It is also possible to edit the voice information here.

Downloading images may be done by moving the mouse cursor to a download button 1110 provided with the page and clicking the button. It is also possible to set that downloading is made automatically to a specified viewer terminal device 101 when the server 200 receives an image.

It is also possible for the user to customize the viewer page. This enables the user to create a page matching the purpose of the page and convenience of the user.

The above description covering from photographing with the image processing system to viewing is only an example as already mentioned and is not intended to limit the scope of the invention.

Here, it is assumed that the user goes to the place where the user wants to take images and takes images with the photographing terminal device 100. Here, a case of using a camera A, the photographing terminal device 100 of the present invention, is compared with a case of using a conventional camera B. In the following description, the camera A or the camera B is simply referred to as the camera when no distinguishing is necessary between the two.

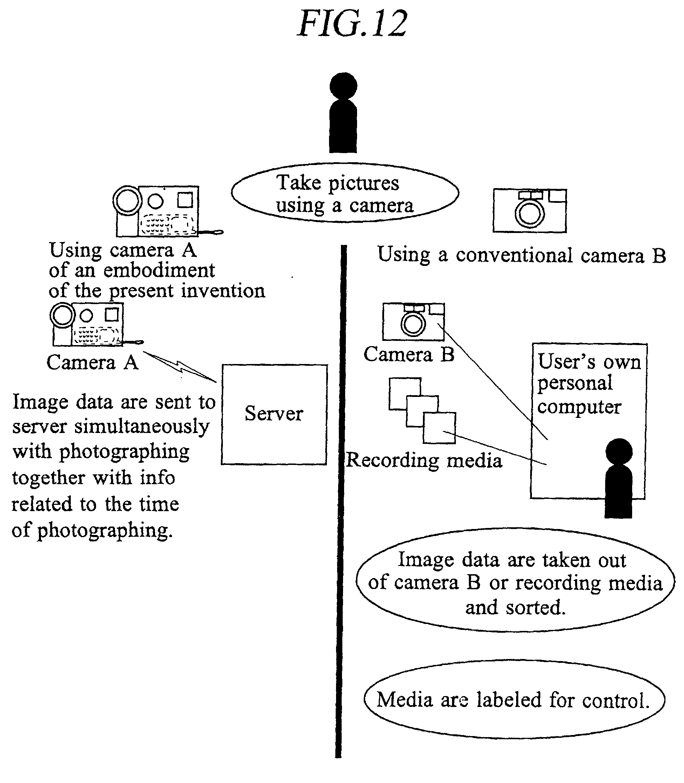

FIG. 12 shows when the camera A as an embodiment of the present invention is used in comparison with the conventional camera B as a comparison example. In reference to FIG. 12, a case that the camera A of the present invention is used is described in comparison with the case that the conventional camera B is used during the process from taking images by the user to storing the photographed images. First, the user uses the camera A or the camera B to take images of an object to be photographed and obtains the image data.

With the conventional camera B, the user takes pictures with the camera B, comes back home or office, takes out the photographed data from the camera B or from a recording medium on which the image data are recorded, and sorts the data using a personal computer or the like. The sorted image data is stored by labeling the recording medium with sorted data. The above process takes much time and labor in sorting the image data. Moreover, as the image data are often recorded on plural recording media, efficient storage and control is difficult.

With the camera A of the present invention on the other hand, the image data taken by the user using the camera A are automatically transmitted to the server simultaneously with photographing and stored in the server. Therefore, the user need not take time for sorting the image data. As the image data are stored as a whole in the server, storage is made efficient. As the information at the time of photographing is attached to the image data and transmitted together with the image data to the server, control of the image data is also made efficient.

Furthermore with the camera A, since the image data are stored in the server immediately after the data are photographed, the data cannot be lost even if the camera A is destroyed or damaged.

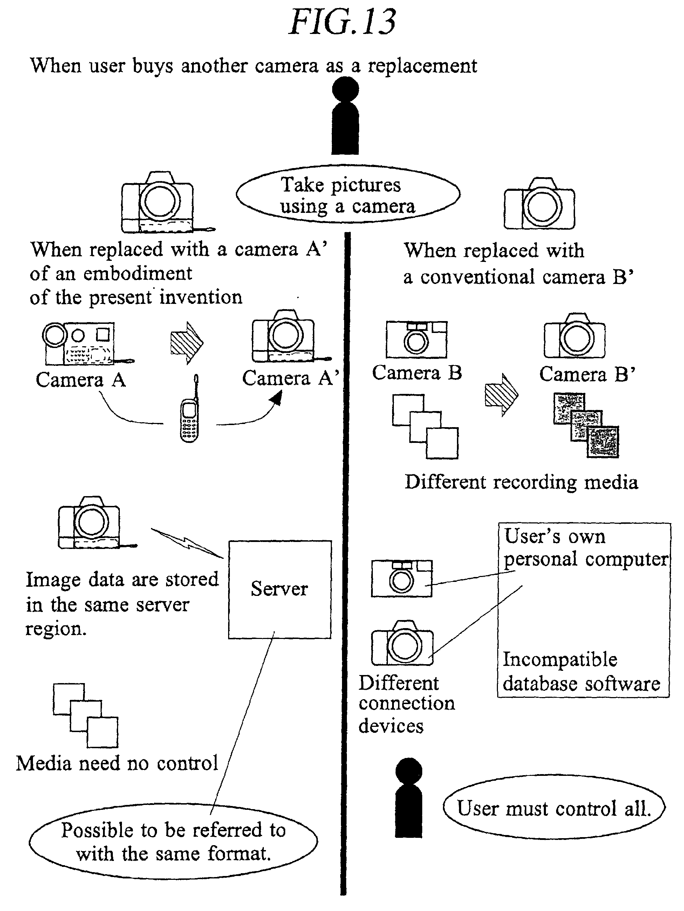

FIG. 13 shows a case that the camera A as an embodiment of the present invention is used in comparison with the conventional camera B as a comparison example. In reference to FIG. 13,a situation is described in which the user buys another camera in place of the camera used so far.

In most conventional cases, the recording medium or the image data format for the camera B is different from that for the newly bought camera B'. As a result, the image data taken with the camera B' cannot be stored with the database software that the user has been using so far, and must be stored with a different database software. Moreover, connection devices for extracting image data of the camera B' into a personal computer or the like must be separately prepared. Therefore, the user ends up in controlling plural memory media and data softwares and is inevitably inconvenienced in spite of buying a new camera of higher performance.

In contrast to the above, in the case of the camera A of the present invention, even if the user buys another camera A' as a replacement for the camera A, the photographed image data are stored in the server 200 of the same format, so that the user need not worry about the difference in the memory media and image data format. In case that the user uses a cellular phone having the function of i-Mode (trade name) for example as the communication device 110 (FIG. 2), since the communication device 110 has the individual authentication information stored, the user may simply connect the communication device to the camera A' and continue the same photographing operation as before. Therefore, the user can buy a new camera A' without care because the camera A' may be used in the same manner as before.

In case that the user takes images with a borrowed camera A, if the user has the communication device 110 as described above, the photographed image data may be sent to and stored in the image server 200 by connecting the camera A to the communication device 110. In other words, even if the user does not carry a camera when going on a trip for example, it is easy to take pictures at the trip destination with a camera borrowed from a rental service or the like.

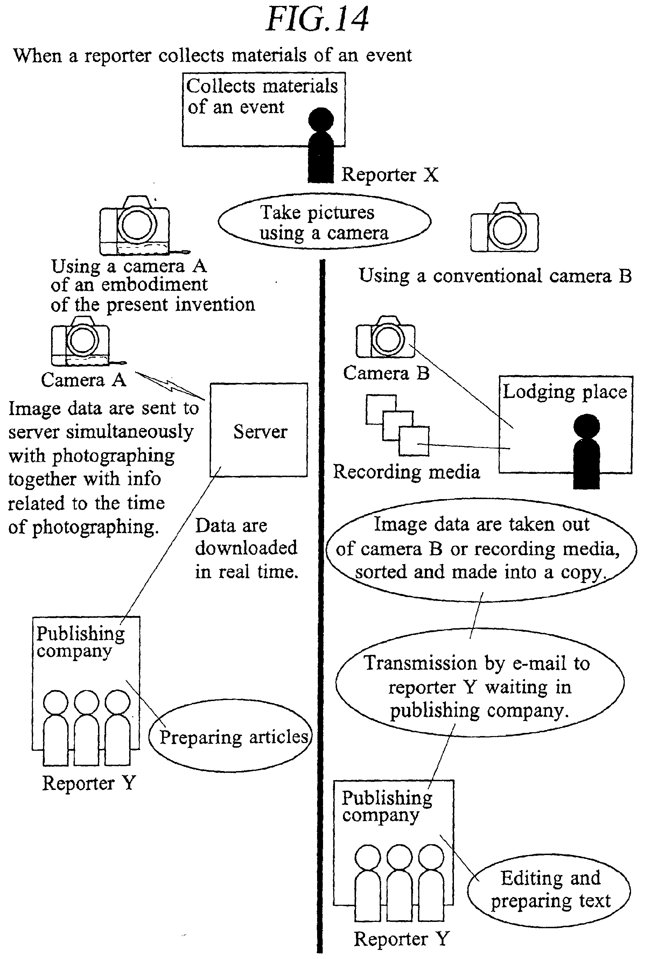

FIG. 14 is for explaining a case in which the camera A as an embodiment of this embodiment is used to cover an event in comparison with a case in which the conventional camera B is used for the same purpose. In reference to FIG. 14, the manner of use of the camera A of the present invention is compared with that of the conventional camera B during the process by the user as a reporter of a publishing company for example, from photographing to preparing an article covering an event.

Here, it is assumed that a reporter X collects materials of an event site while another reporter Y is waiting in a publishing company. Both of the reporters X and Y are users, especially the reporter Y is a permitted viewer mentioned before. First, the reported X takes images of an object to collect materials using a camera A or a camera B to obtain image data.

When the reporter X takes images of an object to be covered in an event using the conventional camera B, the reporter X returns to a lodging place near the event site after finishing to collect materials of the event, takes out photographed image data from the camera B or from recording media on which the image data are stored, and sorts the image data using a personal computer or the like. Then the reporter X prepares a copy to be sent to the publishing company using the sorted image data and information collected by covering the event.

Then the reporter X sends the prepared text with the sorted image data attached to the text to the publishing company by e-mail or the like. The reporter Y receives the e-mail, edits the received text and image data, and prepares an article.

In contrast to the above, with the camera A of the present invention, the image data taken by the reporter X with the camera A are immediately transmitted automatically to the server and stored there. At the same time, the reporter Y waiting in the publishing company refers to the image data stored in the server and downloads the image data from the server. That is to say, the reporter Y can download the image data taken by the reporter X in real time manner. Since voice information and the like is attached to the image data, the reporter Y prepares an article using the downloaded image data and voice information at the time of photographing.

As described above, the reporter Y can start preparing the article using the image data from the moment the reporter X takes images and covers the event. As a result, the time required from photographing to the preparation of the article is drastically reduced, and the process is carried out at a speed impossible in the past. That effect is specially useful in on-site coverage of events where speed is required as in scooping.

When images are taken with the photographing terminal device 100, the images may be made available worldwide just after being taken.

While an embodiment is described assuming that the image data are still image data, the present invention may be embodied with motion image data as well.

### Industrial Applicability

As described above, the photographing terminal device 100 according to the present invention comprises the photographing section 114 for taking images of an object and producing image data, the transmitter 110 for sending the produced image data to a remote server in real time, and the additional information producing devices 111, 115 for producing additional data related to additional information in addition to the produced image data, and sends the image data together with the additional data to the remote server. Therefore, not only there is no need of separately recording the additional information at the time of photographing but pictures can be taken practically in unlimited quantity in any place that can be connected to the remote server.

## Claims

1. A photographing terminal device comprising:
a photographing section for taking images of an object and producing image data;
a transmitter for sending the produced image data to a remote server in real time; and
an additional information producing device for producing additional data related to additional information in addition to said produced image data; and
adapted to send said additional data together with said image data to said remote server.

2. The photographing terminal device as recited in claim 1, comprising:
an image storing section for storing said produced image data; and
a controller for controlling so that new image data may be stored in a part of a storage region of said image storing section, the part from which data have already been sent to the remote server by means of said transmitter.

3. A photographing terminal device comprising:
a photographing section for taking images of an object and producing image data;
an image storage section for storing said produced image data;
an output section for outputting said stored image data to a transmitter for sending the image data to a remote server;
a controller for controlling so that new image data may be stored in a part of a storage region of said image storing section, the part from which data have already been sent to said remote server by means of said transmitter; and
an additional information producing device for producing additional data related to additional information in addition to said produced image data; and
adapted to send said additional data together with said image data to said remote server.

4. An image processing server comprising:
a receiving section for receiving image data sent from a remote photographing terminal device;
a user information database for storing user information related to a user of said photographing terminal device; and
an image data storing section for storing the received image data made to correspond to the user information in said user information database.

5. The image processing server as recited in claim 4, comprising a processing section for processing the image data stored in said image data storing section.

6. The image processing server as recited in claim 4 or 5, comprising an output section for outputting the stored image data on request of a user.

7. A photographing method comprising the steps of
photographing an object and producing image data;
storing said produced image data;
producing additional data related to additional information in addition to said produced image data; and
transmitting said stored image data together with said additional data to a remote server in real time; and
adapted to accumulate differentials between said produced image data and said transmitted image data.

8. An image processing method comprising the steps of
receiving image data sent from a remote photographing terminal device;
storing user information related to a user of said photographing terminal device; and
storing said received image data made to correspond to said stored user information.

9. The image processing method as recited in claim 8 comprising the steps of
processing said stored image data; and
outputting said processed image data on request of a user.
